# EUROPEAN PATENT APPLICATION

(11) **EP 2 514 553 A2**
(43) Date of publication of application: **24.10.2012**
(21) Application number: 12164081.7
(22) Date of filing: 13.04.2012
(51) Int. Cl.: B23K 26/06, B23K 26/073, B23K 26/067, B23K 26/34

(54) **Method of manufacturing a component**

(30) Priority: 20.04.2011 GB 201106624
(71) Applicant: Rolls-Royce plc, London SW1E 6AT (GB)
(72) Inventor: Clark, Daniel, Derby, Derbyshire DE56 1TG (GB); Grafton-Reed, Clive, Broughton Astley, Leicestershire LE9 6QB (GB)
(74) Representative: Tindall, Adam

(57) **Abstract**

Apparatus for manufacturing a component and a method of manufacturing a component, e.g. by material deposition. The method comprises the steps of directing a beam (20) of energy to heat a working region (56) of a substrate (32) and adjusting the cross sectional shape of the beam (20) to thereby generate a variety of predetermined cross sectional shapes of working region (56) while the beam (20) is being directed onto the substrate (32). Thus the distribution of energy delivered to the substrate (32) is controlled during the manufacturing process. The cross sectional shape and area of the beam (20) is repeatedly monitored and compared to a library (46) of predetermined cross sectional shape(s) and area(s).

## Description

The present invention relates to a method of manufacturing a component.

In particular it relates to manufacturing a component by directing a beam of energy from a heating means to heat a working region of a substrate.

Manufacture of components by material deposition, for example by weld deposition or powder bed layer deposition, is known. In such processes a heating means (for example, a laser) is passed over a substrate, bringing a working region of the substrate to a molten state as it moves relative to the substrate. Powdered material is delivered to the molten region, brought to a molten state, and then cooled such that it solidifies and creates a solid structure along the direction of travel of the heating means.

The shape of the working region is determined by the shape of the laser beam projected onto the substrate. The amount and distribution of heat delivered to the working region is determined by the energy intensity profile of the laser. The laser beam cross section and energy intensity profile may be adjusted between manufacturing operation by adjustment of the laser optics which deliver the energy from the laser to the substrate. However, conventionally these parameters are fixed during the manufacturing operation to ensure that the shape and energy intensity profile are optimised for a given section of a machining operation. This has the disadvantage that in a structure with a combination of large and fine detail, either the laser optics must be adjusted between completing the large detail and starting the fine detail, thereby increasing set up time between runs, or the configuration which enables fine detail is used for the large detail, which results in long processing times.

Hence a method of manufacture and apparatus which reduces optics setup time and reduces manufacturing time (i.e. material deposition time), is highly desirable.

### Summary of Invention

The present invention is defined in the attached independent claim to which reference should now be made. Further, preferred features may be found in the sub-claims appended thereto.

According to a first aspect of the present invention there is provided a method of manufacturing a component comprising the steps of directing a beam of energy to heat a working region of a substrate; adjusting the cross sectional shape of the beam to thereby generate a variety of predetermined cross sectional shapes of working region while the beam is being directed onto the substrate to thereby control the distribution of energy delivered to the substrate during the manufacturing process.

Preferably the energy intensity profile of the energy beam is adjusted during the manufacturing process to achieve a variety of predetermined energy distributions.

According to a second aspect of the present invention there is provided a method of manufacturing a component comprising the steps of directing a beam of energy to heat a working region of a substrate; adjusting the energy intensity profile of the energy beam during the manufacturing process to achieve a variety of predetermined energy distributions while the beam is being directed onto the substrate; to thereby control the distribution of energy delivered to the substrate during the manufacturing process.

According to a third aspect of the present invention there is provided apparatus for manufacture of a component by a material deposition process comprising a heating means operable to direct a beam of energy to heat a working region of a substrate; and a means for adjusting the cross sectional shape of the beam to thereby generate a variety of predetermined cross sectional shapes of working region; said means for adjusting the cross sectional shape beam being operable to adjust the cross sectional shape of the working region while the beam is being directed onto the substrate. Preferably the apparatus further comprises a means operable to simultaneously adjust the energy intensity profile of the energy beam during the manufacturing process to achieve a variety of predetermined energy distributions.

Hence the cross sectional shape of the working region and the distribution of energy delivered to the working region can be varied throughout the manufacturing process, thereby reducing optics set up time and enabling increased deposition rates, thereby reducing the overall manufacturing processing time.

### Brief Description of the Drawings

Embodiments of the invention will now be described with reference to the accompanying drawings, in which:
Figure 1 shows an arrangement of the apparatus according to the present invention, including a heating means operable to direct a beam of energy onto a substrate;
Figure 2 shows an alternative arrangement of the apparatus to that shown in Figure 1;
Figures 3 to 6 show examples of different energy beam cross sectional areas that the apparatus of the present invention is operable to generate;
Figures 7 to 9 show examples of different energy intensity profiles that the apparatus of the present invention is operable to generate;
Figures 10 to 15 are representations of some examples of energy intensity distributions vs working region cross sectional shape that the apparatus of the present invention is operable to generate;
Figure 16 shows a mode of operation of the present invention;
Figure 17 shows an alternate mode of operation of the present invention;
Figure 18 shows a further mode of operation of the present invention; and
Figure 19a-d is a representation of one possible sequence of change in cross sectional shape of the energy beam and working region.

### Detailed Description of Embodiments

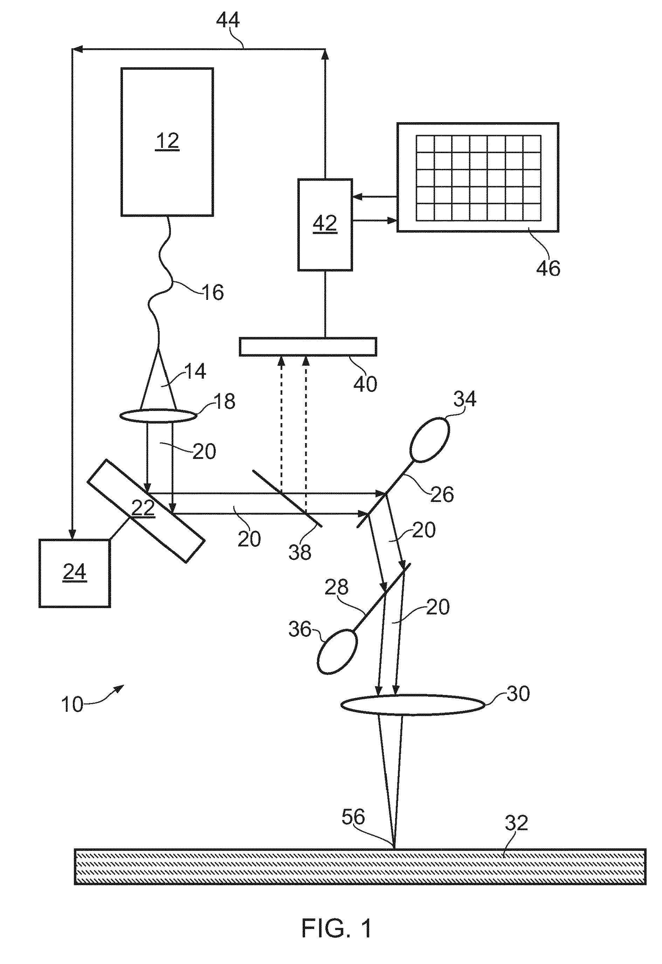

Figure 1 shows a heating means 10, which comprises an energy beam source 12, in this case a laser 12, which delivers a beam of energy 14 via a fibre optic cable 16 to a collimating lens 18 to produce a beam of coherent energy 20. A deformable reflective means 22 for adjusting the cross sectional shape of the beam 20, for example a deformable mirror 22, is located in the path of the beam 20. The deformable reflective means 22 is also operable to adjust the energy intensity profile of the energy beam 20. The reflective profile of the deformable means 22 is controlled by an actuator 24. In the embodiment shown the deformable means 22 comprises a foil mirror which is actuated by a piezo-electrical control means 24. It may alternatively be hydraulically or pneumatically actuated. The deformable means 22 directs the energy towards an array of movable mirrors 26,28, which then directs the energy beam through a convergent lens 30 to focus the beam down to the correct size on the substrate 32. The movable mirrors 26,28 are moveably mounted and actuated by electric motors 34,36 respectively and operable to direct the energy beam 20 to different locations on the substrate. The convergent lens 30 is configured to minimise distortion of the beams cross sectional shape and energy intensity profile.

A semi transparent mirror 38 is provided between the deformable means 22 and the array of movable mirrors 26,28, which directs a relatively small percentage of the beam onto a monitoring means 40 operable to monitor the cross-sectional shape and area of the coherent beam 20. The monitoring means 40 provides an input to a comparator means 42 operable to compare the actual and a predetermined cross sectional shape(s) and areas(s) of the beam and generate a signal 44 indicating any disparity between the actual and predetermined cross sectional shape(s) and areas(s) of the beam 20. The predetermined cross sectional shape(s) and areas(s) of the beam 20 is retrieved from a look up table 46 comprising a correlation between cross sectional shape(s) and areas(s) of the beam 20 and predetermined steps in the manufacturing process. The deformable means 22 is operable to adjust the cross sectional shape of the beam in dependence upon the signal 44 generated by the comparator means 42.

The heating means 10 and substrate 32 are mounted such that they are movable relative to one another.

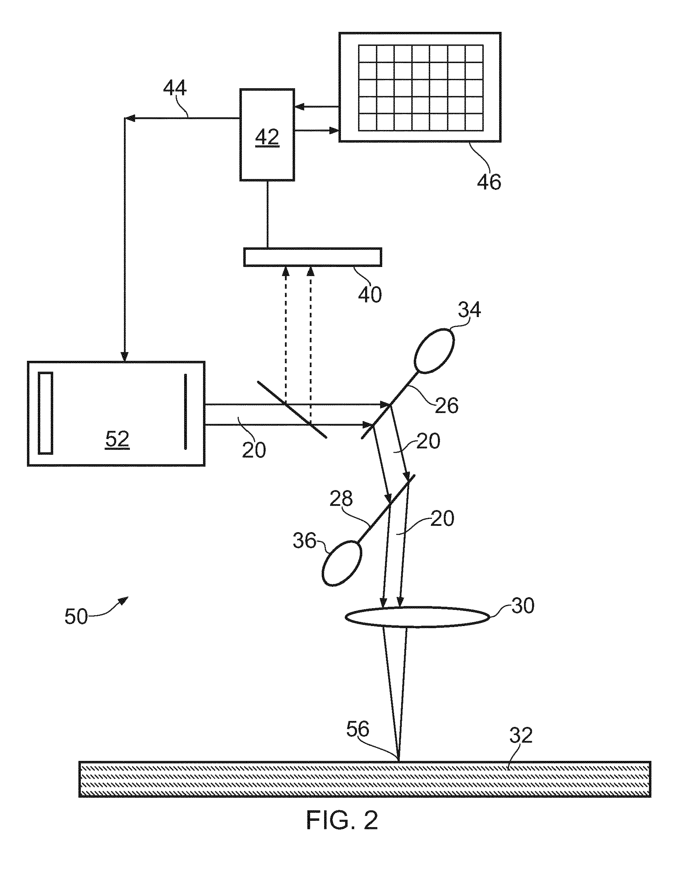

An alternative embodiment of heating means 50 is presented in Figure 2. In most respects the configuration is as shown in Figure 1, and hence common features share the same integer number. The heating means 50 comprises a energy beam source 52, in this case a laser 52, which delivers a coherent beam of energy 20 directly to the array of movable mirrors 26,28. In this embodiment deformable reflective means 22 is integral with the energy beam source 52, and hence the beam 20 exits the beam source 52 with a predetermined cross sectional shape and energy intensity profile. The structure of the remainder of the heating means 50 is as that of the embodiment shown in Figure 1, with the exception that the signal 44 from the comparator means 42 is communicated to deformable reflective means 22 inside the energy beam source 52.

During operation of the above described embodiments, the beam of energy 20 from the heating means 10,50 is directed onto the substrate 32 to define a working region 56. A material is delivered to the working region 56, brought into a temporary molten state and deposited on the substrate 32 such that when the material solidifies it forms at least part of a component being built. The beam 20 and substrate 32 are displaced relative to one another such that the beam 20 moves across the surface of the substrate 32 to build the structure of the component. Material deposition processes using energy beams, for example laser weld deposition (where powdered material is sprayed into the working region 56) or powder bed deposition (where powdered material is laid down after each scan of the energy beam) is well known and understood and does not form part of the present invention in itself.

In the method of the present invention, the heating means 10,50 is programmed to alter the surface profile of the deformable reflective means 22 and thus adjust the cross sectional shape of the beam 20 to thereby generate a variety of predetermined cross sectional shapes of working region 56 while the beam 20 is being directed onto the substrate 32.

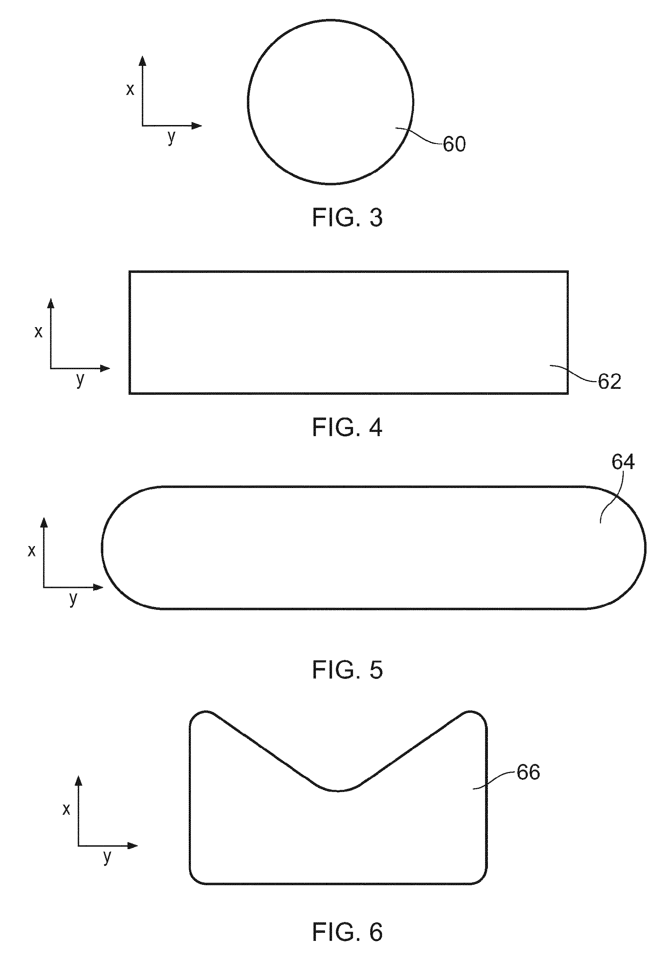

Figures 3 to 6 show non limiting examples of different energy beam cross sectional areas that the apparatus of the present invention is operable to generate.

With reference to figure 3, the heating means 10, 50 is operable to generate a beam with a circular cross sectional shape 60 to thereby generate a working region 56 having a circular cross sectional shape 60.

With reference to figure 4, the heating means 10, 50 is operable to generate a beam with a polygonal cross sectional shape 62 to thereby generate a working region 56 having a polygonal cross sectional shape 62.

With reference to figure 5, the heating means 10, 50 is operable to generate a beam with an elongate cross sectional shape 64 to thereby generate a working region 56 having an elongate cross sectional shape 64.

With reference to figure 6, the heating means 10, 50 is operable to generate a beam with an irregular cross sectional shape 66 to thereby generate a working region 56 having an irregular cross sectional shape 66.

The heating means 10,50 is also operable to distort the cross sectional shape of the beam to thereby distort the cross sectional shape of the working region 56. That is to say, the beam 20 may be shaped to have a wide variety of cross sectional shapes and cross sectional areas. The shapes created may not be symmetrical about any axis.

The energy intensity profile of the energy beam 20 is also adjusted during the manufacturing process to achieve a variety of predetermined energy distributions.

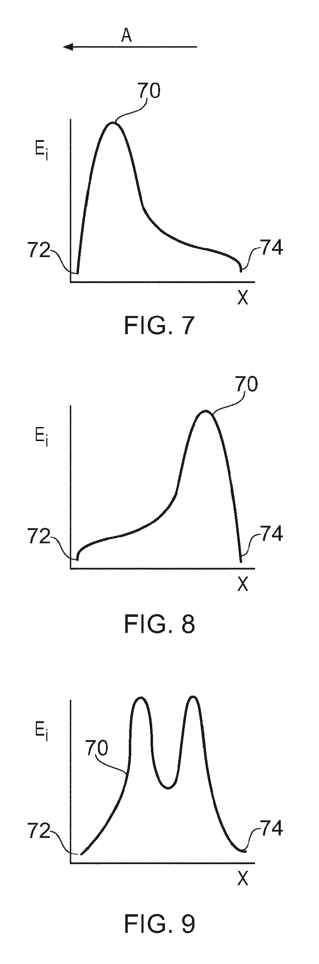

Figures 7 to 9 show examples of different energy intensity profiles that the apparatus of the present invention is operable to generate. The profiles show a relationship between Energy intensity (Eᵢ) 70 plotted against a cross sectional line taken through the energy beam 20, and hence the working region 56, from a leading edge 72 to a trailing edge 74. That is to say, with a working region 56 which moves along a substrate, the direction of travel of the working region 56 is from right to left as indicated in the figures by arrow "A". In the example shown figure 7 the energy intensity peaks towards the leading edge 72 of the working region 56. In the example shown figure 8 the energy intensity peaks towards the trailing edge 74 of the working region 56. In the example shown figure 9 the energy intensity is minimal at the leading edge 72 and trailing edge 74, but comprises two adjacent peaks on either side of the centre of the working region 56.

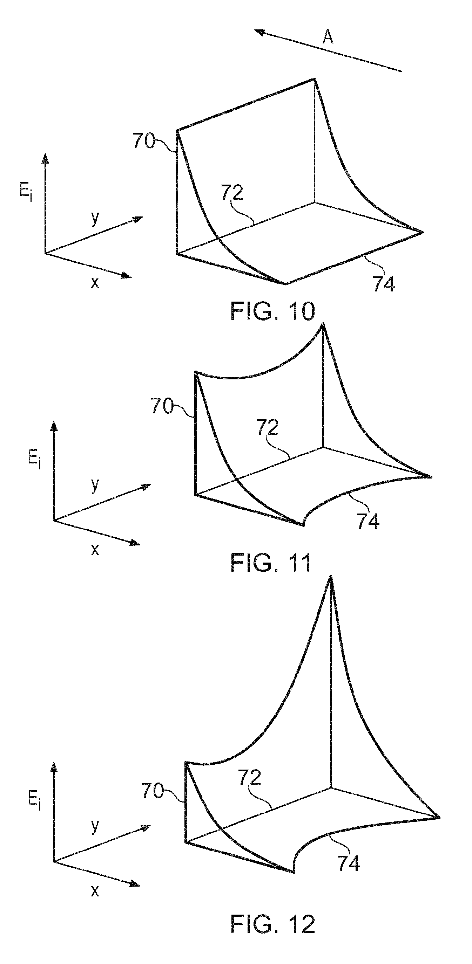

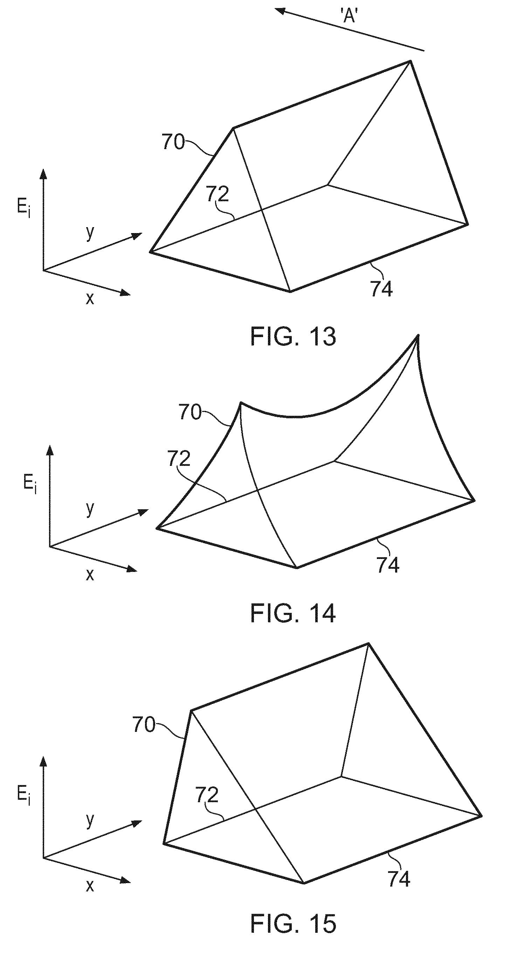

Figures 10 to 15 are representations of some examples of energy intensity distributions plotted against working region 56 cross sectional shape that the apparatus of the present invention is operable to generate. The profiles show a relationship between Energy intensity (Eᵢ) 70 plotted over the cross sectional shape of the beam 20 as projected onto the substrate to generate a working region 56, the cross sectional shape being defined in a x,y plane. In the examples shown, with a working region 56 which moves along a substrate, the direction of travel of the working region 56 is from right to left as indicated in the figures by arrow "A". Hence the leading edge 72 is on the left and the trailing edge is on the right. In the example shown figure 10 the beam 20 is of a rectangular cross sectional shape having an energy intensity profile that peaks towards the leading edge 72 of the working region 56. In the example shown figure 11 the beam 20 is of a distorted rectangular cross sectional shape having an energy intensity profile that peaks towards the leading edge 72 of the working region 56 and towards either edge of the beam cross section. In the example shown figure 12 the beam 20 is of a distorted rectangular cross sectional shape having an energy intensity profile that peaks towards the leading edge 72 of the working region 56 and towards either side of the beam cross section. This example differs to that shown in Figure 11 in that the energy intensity peak is substantially greater at one side than the other. In the example shown figure 13 the beam 20 is of a rectangular cross sectional shape having an energy intensity profile that is minimal at the leading edge 72 and trailing edge 74, having a peak between the leading edge 72 and trailing edge 74. In the example shown figure 14 the beam 20 is of a distorted rectangular cross sectional shape having an energy intensity profile that is minimal at the leading edge 72 and trailing edge 74, having a peak between the leading edge 72 and trailing edge 74 and towards either edge of the beam cross section. The example shown in figure 15 is essentially as that in figure 13, except the energy intensity peak is closer to the leading edge 72 than to the trailing edge 74. It will be appreciated that the profiles shown in Figures 10 to 15 are idealised and in practice the sharp edge of the profiles may be more rounded, as shown in Figures 7 to 9.

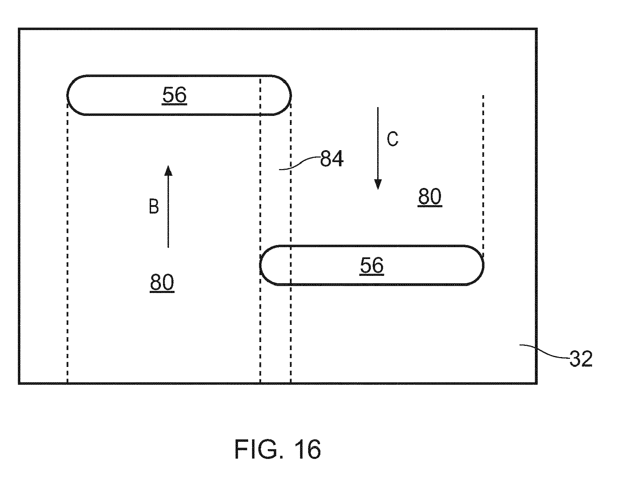

Figure 16 shows one example of a mode of operation of the present invention in which the energy beam 20 has been shaped into an elongate shape to generate a working region 56 with an elongate working region 56. The working region 56 is translated in a first direction indicated by arrow B, and then displaced to one side and translated in a second direction, indicated by arrow C, which is opposite to the first direction B. Material is deposited as the working region 56 passes along the substrate 32 to form part of a structure 80. There is an overlap region 84 between the material deposited in the first direction B and the second direction C which is at an elevated temperature. The energy intensity of the beam 20 is adjusted to reduce the amount of energy delivered to the overlap region, thus ensuring the overlap region 84 is not over heated. For example, the energy intensity could be similar to that presented in figure 12, with a lower intensity provided at one edge (i.e. the edge covering the overlap region 84), with the energy density increasing as the distance from the overlap region 84 increases.

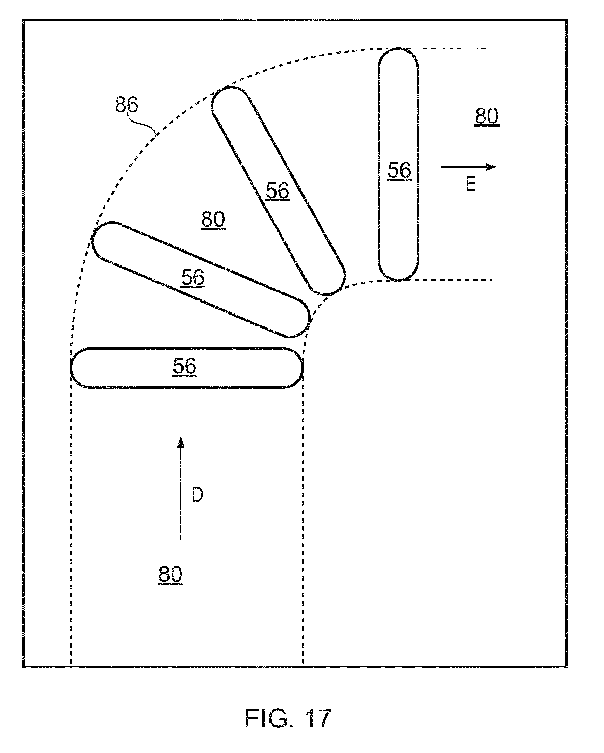

The heating means 10,50 is also operable to rotate the cross sectional shape of the beam 20, and thereby rotate the cross sectional shape of the working region 56. This is achieved by altering the surface profile of the deformable reflective means 22 rather than, for example, rotating the heating means 10,50 and substrate relative to one another. Figure 17 shows an example of an elongate working region 56 being rotated through 90 degrees while in transition between travelling in a third direction D to a fourth direction E at an angle to the third direction E to generate a structure 80 with a constant wall thickness having an arcuate section 86.

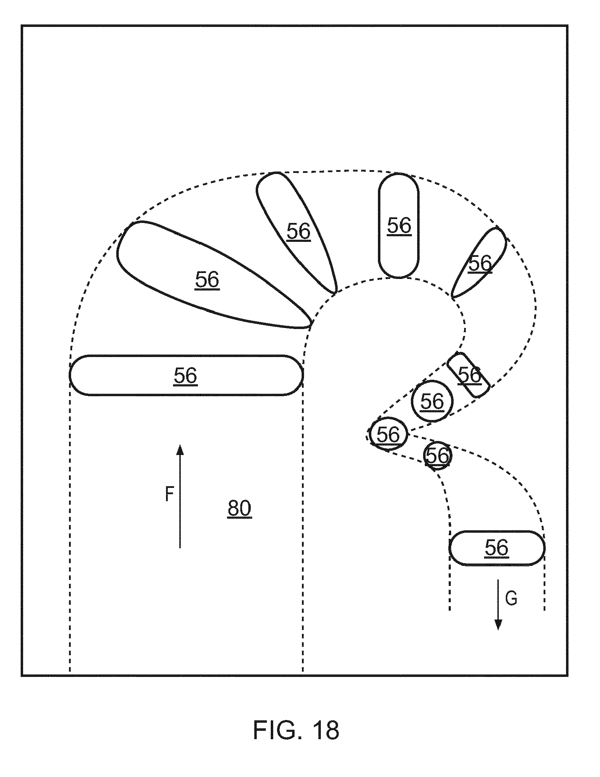

Figure 18 presents another example of how the working region 56 may be adjusted during the manufacturing process. An initially elongate working region 56 is rotated through 90 degrees from a fifth direction F to a sixth direction G at 180 degrees to the fifth direction F whilst defining a convoluted arcuate path of varying width. Hence the beam 20, consequently the working region 56, is constantly changing in cross section shape, cross sectional area and orientation. That is to say, the deformable reflective means 22 is operated to adjust the cross sectional shape and cross sectional area of the beam 20 to position the working region 56 in a predetermined orientation. At the same time the array of movable mirrors 26,28 are directing the beam 22 along a path which defines the structure 80. As can be seen in this example, the working area 56 transitions between an elongate shape to an irregular shape whilst being rotated and reduced in cross sectional area and transitioning back to a regular elongate shape. It is rotated further and transitions to an irregular shape, then a regular elongate shape, a circle, an ellipse and a circle again whilst further reducing in cross sectional area, and then back to regular elongate shape of a larger cross sectional area. Throughout the change in shape, area and direction, the energy intensity profile Eᵢ of the beam 20 is simultaneously adjusted to vary the energy intensity profile Eᵢ of the working region. For example, it may vary from a profile similar to that in Figure 10 to that of Figure 12, with a lower intensity towards the small radius of an arc and a larger intensity on the larger radius of the same arc. As the working region moves from left to right at the "top" of the figure, the energy intensity profile may resume a profile similar to that of Figure 10, and then have a distribution similar to that of Figure 9 for the remainder of the process.

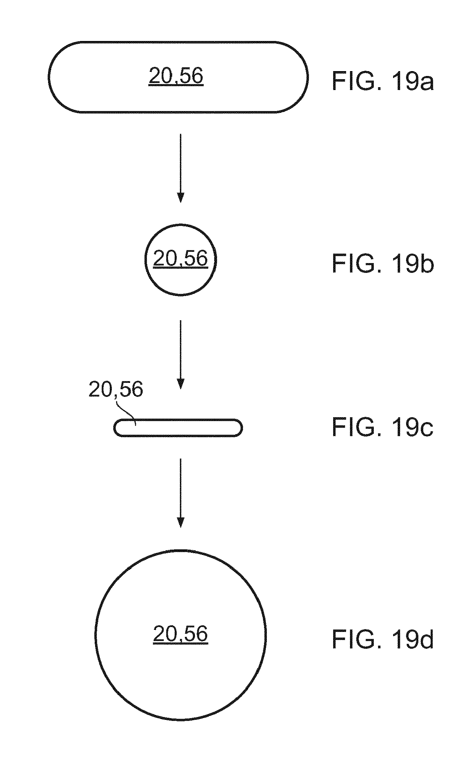

Figure 19a-d is a representation of another possible sequence of change in cross sectional shape of the energy beam 20 and working region 56. In this example the beam 20 transitions from a first mode in which it has a regular (i.e. symmetrical) elongate shape to a circle of smaller cross sectional area, to a regular elongate shape having the same cross sectional area as the preceding circle, and then to a circle having a significantly larger cross sectional area. Through out this the energy intensity profile of the beam may be held constant (although distorted by the change in shape of the beam 20), or be varied, for example the first elongate shape may have a energy intensity profile according to that presented in Figure 7, the second elongate shape a profile according to that presented in Figure 8 and the two circular shapes having a profile according to that presented in Figure 9.

The cross sectional shape and energy intensity profile of the energy beam 20 may be adjusted individually or simultaneously during the manufacturing process. The cross sectional shape may be held constant while the energy intensity profile is adjusted, and energy intensity profile may be held constant while the cross sectional shape is adjusted, or both the cross sectional shape and energy intensity profile may be varied at the same time. That is to say, in a first mode of operation the beam 20 has a first predetermined energy distribution and a first predetermined cross sectional shape. In a second mode of operation the beam has a second predetermined energy distribution and the same or a second predetermined cross sectional shape. During the manufacturing process the energy intensity profile and cross sectional shape of the beam may transition between the first mode of operation and the second mode of operation.

As described above, a semi transparent mirror 38 is provided between the deformable means 22 and the array of movable mirrors 26,28, which directs a relatively small percentage of the beam onto a monitoring means 40 operable to monitor the cross-sectional shape and area of the coherent beam 20. A small percentage of output of the beam (for example approximately 5%) may be diverted to the monitoring means 40. The monitoring means 40 provides an input to a comparator means 42 which compares the actual and a predetermined cross sectional shape(s) and areas(s) of the beam and generates a signal 44 indicating any disparity between the actual and predetermined cross sectional shape(s) and areas(s) of the beam 20. The predetermined cross sectional shape(s) and areas(s) of the beam 20 is retrieved from a look up table 46 comprising a correlation between cross sectional shape(s) and areas(s) of the beam 20 and predetermined steps in the manufacturing process. The deformable means 22 then adjusts the cross sectional shape of the beam in dependence upon the signal 44 generated by the comparator means 42. That is to say, the working region 56 shape and/or size is adjusted in dependence upon the result of the comparison of the actual and predetermined cross sectional shape and area of the beam to thereby substantially achieve the predetermined cross sectional shape(s) and area(s) of the working region during the manufacturing process. The cross sectional shape and cross sectional area of the beam 20 is repeatedly monitored and compared to the library of predetermined cross sectional shape(s) and cross sectional area(s).

Hence the distribution of energy delivered to the substrate 32 is controlled during the manufacturing process.

The present invention allows a programmable, configurable control of the temperature distribution of the working region 56 and in the region around the working region. This enables heat flux compensation for a variety of component feature geometries and enables generation and control of an optimum molten pool size and shape to deliver an optimum resultant microstructure in the component being manufactured, as well as assisting in producing features of a component accurately.

Since the beam energy intensity can be manipulated to deliver energy to where it is needed at the intensity it is required at, this results in a more efficient use of energy which allows a lower power laser to be used, or a greater processing rate achieved with an existing laser or a more powerful laser to be used at a high rate with minimal heat accumulation.

The heating means 10,50 may be included as a tool on a computer numerically controlled deposition laser. The laser may be a fibre laser, disk laser, CO₂ laser or Nd:YAG or a direct diode source.

Although the deformable means 22 has been described above with reference to Figure 1 and 2 as being a deformable mirror, in alternative embodiments the deformable means is provided as a deformable lens, with light passing through it to the next optic in the beam path rather than reflecting off it.

As well as depositing material on a planar substrate, as shown in the figures, the present invention may also be used to deposit material on a non planar (i.e. curved) substrate, or on a substrate having a complex geometry.

The present invention may used in manufacture and rapid prototyping technologies using metal powders, plastics and polymer resins.

## Claims

1. A method of manufacturing a component comprising the steps of
directing a beam of energy to heat a working region of a substrate;
adjusting the cross sectional shape of the beam to thereby generate a variety of predetermined cross sectional shapes of working region while the beam is being directed onto the substrate
to thereby control the distribution of energy delivered to the substrate during the manufacturing process
wherein the cross sectional shape and area of the beam is repeatedly monitored and compared to a library of predetermined cross sectional shape(s) and area(s).

2. A method of manufacturing a component as claimed in claim 1 wherein the energy intensity profile of the energy beam is adjusted during the manufacturing process to achieve a variety of predetermined energy distributions.

3. A method of manufacturing a component as claimed in claim 2 wherein the cross sectional shape and energy intensity profile of the energy beam are adjusted simultaneously during the manufacturing process.

4. A method of manufacturing a component as claimed in claim 2 or claim 3 wherein
in a first mode of operation the beam has a first predetermined energy distribution and a first predetermined cross sectional shape;
in a second mode of operation the beam has a second predetermined energy distribution and the same or a second predetermined cross sectional shape; and during the manufacturing process the energy intensity profile and cross sectional shape of the beam may transition between the first mode of operation and the second mode of operation.

5. A method of manufacturing a component as claimed in any one of claims 1 to 4 wherein the heating means generates a beam with a circular or polygonal cross sectional shape to thereby generate a working region having a circular or polygonal cross sectional shape.

6. A method of manufacturing a component as claimed in any one of claims 1 to 4 wherein the heating means generates a beam with an irregular cross sectional shape to thereby generate a working region having an irregular cross sectional shape.

7. A method of manufacturing a component as claimed in any one of the preceding claims wherein the cross sectional shape of the beam is distorted to thereby distort the cross sectional shape of the working region.

8. A method of manufacturing a component as claimed in any one of the preceding claims wherein cross sectional shape of the beam is rotated to thereby rotate the cross sectional shape of the working region.

9. A method of manufacturing a component as claimed in any one of the preceding claims further comprising the steps of
delivering a material to the working region;
bringing the material into a temporary molten state; and
depositing said material on the substrate such that when the material solidifies it forms at least part of the component.

10. A method of manufacturing a component as claimed in any one of the preceding claims wherein the working region shape and/or size is adjusted in dependence upon the result of the comparison of the actual and predetermined cross sectional shape and area of the beam to thereby substantially achieve a predetermined cross sectional shape(s) and area(s) of the working region during the manufacturing process.

11. Apparatus for manufacture of a component by a material deposition process comprising
a heating means operable to direct a beam of energy to heat a working region of a substrate; and
a means for adjusting the cross sectional shape of the beam to thereby generate a variety of predetermined cross sectional shapes of working region;
said means for adjusting the cross sectional shape beam being operable to adjust the cross sectional shape of the working region while the beam is being directed onto the substrate
wherein the apparatus further comprises a monitoring means operable to monitor the cross-sectional shape and area of the beam, and the monitoring means provides an input to a comparator means operable to compare the actual and a predetermined cross sectional shape(s) and areas(s) of the beam and generate a signal indicating any disparity between the actual and predetermined cross sectional shape(s) and areas(s) of the beam.

12. Apparatus for manufacture of a component as claimed in claim 11 further comprising a means operable to simultaneously adjust the energy intensity profile of the energy beam during the manufacturing process to achieve a variety of predetermined energy distributions.

13. Apparatus for manufacture of a component as claimed in claim 11 in which the means for adjusting the cross sectional shape of the beam is operable to simultaneously adjust the energy intensity profile of the energy beam during the manufacturing process to achieve a variety of predetermined energy distributions.

14. Apparatus for manufacture of a component as claimed in any one of claims 11 to 13 wherein the predetermined cross sectional shape(s) and areas(s) of the beam is retrieved from a look up table comprising a correlation between cross sectional shape(s) and areas(s) of the beam and the stage of the manufacturing process.

15. Apparatus for manufacture of a component as claimed in any one of claims 11 to 14 wherein the means for adjusting the cross sectional shape of the beam is operable to adjust the cross sectional shape of the beam in dependence upon the signal generated by the comparator means.
